# DEMANDE DE BREVET EUROPEEN

(11) **EP 4 296 474 A1**
(43) Date de publication de la demande: **27.12.2023**
(21) Numéro de dépôt: 22315126.7
(22) Date de dépôt: 24.06.2022
(51) Int. Cl.: F01D 25/18, F02C 7/06

(54) **RESERVOIR D'HUILE POUR TURBOMACHINE AVEC ROUE CENTRIFUGEUSE COMPATIBLE G NEGATIF**

(71) Demandeur: Safran Aero Boosters, 4041 Herstal (BE); Safran Aircraft Engines, 75015 Paris (FR)
(72) Inventeur: BOUGELET, Stephane Alain Luc Ghislain, Herstal (BE); ORIOL, Sébastien, Melun (FR)
(74) Mandataire: Lecomte & Partners

(57) **Abrégé**

La présente invention concerne un réservoir d'huile (40) pour turbomachine d'aéronef, comprenant : une enceinte (54) apte à contenir l'huile et présentant un axe principal destinée à être orientée verticalement en position de montage ; une entrée d'huile (66) à une partie supérieure de l'enceinte ; une sortie d'huile (74) à une partie inférieure de l'enceinte ; remarquable en ce que le réservoir d'huile comprend, en outre : une roue (80) disposée dans la partie inférieure de l'enceinte et apte à être entrainée en rotation par des moyens d'entrainement (82) de manière à centrifuger l'huile contre une paroi de retenue (56.1) de l'enceinte et contre la sortie d'huile, et ainsi conserver une alimentation en huile de ladite sortie d'huile lors de phases de vol de l'aéronef en pesanteur nulle ou négative.

## Description

### Domaine

L'invention se rapporte au domaine des réservoirs de turbomachine. Plus précisément, l'invention se rapporte au domaine des réservoirs d'huile utilisés pour lubrifier des composants de turbomachine, notamment comprenant une hélice non carénée à pas variable et/ou un redresseur à pas variable.

### Art antérieur

Des turbomachines d'aéronef comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « Unducted Dual Fan ») ou celles ayant une seule hélice non carénée et un redresseur comprenant plusieurs aubes de stator (connues sous l'acronyme anglais USF pour Unducted Single Fan).

Ces turbomachines sont des turbopropulseurs qui se distinguent des turboréacteurs par l'utilisation d'une hélice à l'extérieur de la nacelle (non carénée) au lieu d'une soufflante interne.

L'hélice ou les hélices formant la partie propulsive comprennent généralement un système d'actionnement du pas des aubes de(s) l'hélice(s), également désigné par système à calage variable. Un tel système permet aux aubes de l'hélice de s'orienter selon les besoins des phases de vol de l'aéronef (décollage, croisière, atterrissage, etc.) afin d'assurer une gestion de la poussée dans tous les cas de vol de la turbomachine.

Dans le cas des turbomachines avec une seule hélice non carénée et un redresseur, ce dernier peut aussi comprendre un système à calage variable de manière à améliorer les performances de la turbomachine. Un exemple d'une telle turbomachine est divulgué par le document de brevet publié FR 3 107 319 A1.

Les systèmes à calage variables peuvent nécessiter une alimentation permanente en huile afin de permettre l'actionnement du pas des aubes et la gestion de la poussée du moteur dans tous les cas de vol de la turbomachine (nominaux et extrêmes). Dans l'état de l'art, ces systèmes sont alimentés par un circuit de lubrification principal permettant d'assurer une alimentation en huile des différents composants du moteur (paliers, réducteur, etc.) afin d'assurer des fonctions de lubrification et/ou de refroidissement. Ce circuit est alimenté en huile par un réservoir principal de la turbomachine comprenant entre autres une entrée d'huile en partie supérieure et une sortie en partie inférieure, ce qui permet une alimentation en huile lors des attitudes de vol sous pesanteur ou facteur de charge positif (G positif).

Si de tels réservoirs donnent entière satisfaction lorsque l'aéronef effectue des vols dans des cas de vol en G positif, en revanche, lorsqu'il s'agit de phases de vol sous facteur de charge nul ou négatif (G nul ou G négatif), i.e., en cas de manœuvre de l'aéronef ou en cas de bourrasque de vent ascendante, ces réservoirs n'assurent plus complètement l'alimentation en huile du système d'actionnement du pas.

En effet, les phases de vol en G nul ou G négatif sont des phases de vol temporaires (durent généralement moins de 30 secondes pour les avions civils) pour lesquelles l'aéronef est soumis à des accélérations négatives, par exemple, lorsqu'il subit de brusques diminutions d'altitude.

A cet effet, l'huile contenue dans le réservoir principal est alors renversée, l'huile ne se situe plus aux abords de la sortie en partie inférieure, ce qui génère une coupure dans l'alimentation en huile, entrainant un passage d'air vers le(s) circuit(s) à calage variable, engendrant ainsi des conséquences nuisibles sur le fonctionnement de la turbomachine pouvant induire une perte de contrôle de l'aéronef.

Il est possible d'utiliser des réservoirs tels que ceux qui équipent des avions de chasse, où les phases de vol en G négatif sont fréquentes et indispensables. Cependant, ces réservoirs sont pressurisés, ce qui implique un surpoids important, ainsi qu'un surcoût élevé, incompatible avec les turbomachines comprenant au moins une hélice non carénée.

Par ailleurs, une solution connue permettant d'éviter de nuire au circuit d'actionnement du pas des hélices consiste en cas de G négatif, d'assurer l'alimentation en huile au moyen d'un autre système que le réservoir d'huile principal de la turbomachine. Toutefois, une telle solution implique un encombrement et une masse importante au sein de la turbomachine et une gestion complexe de l'acheminement de l'huile vers le système à calage variable.

Le document de brevet publié FR 3 010 133 A1 divulgue un réservoir comprenant une cloison inclinée munie à ses extrémités d'orifices traversants pour une alimentation continue de la turbomachine. Cependant, la solution proposée par le document présente une marge d'amélioration afin de permettre, par exemple, un plus grand volume d'huile disponible pour alimenter les composants de la turbomachine en cas de vol en G négatif, et sans entraver ledit volume lors du retour en G positif.

### Résumé de l'invention

### Problème technique

La présente invention a pour objectif de pallier au moins un des inconvénients de l'état de la technique susmentionné. Plus particulièrement, l'invention a pour objectif de proposer un réservoir d'huile dont la conception est telle qu'elle permet à l'aéronef d'effectuer, en toute sécurité, des phases temporaires de vol en pesanteur négative, sans augmenter le poids et le coût du réservoir.

### Solution technique

L'invention a trait à un réservoir d'huile pour turbomachine d'aéronef, comprenant :
- une enceinte apte à contenir l'huile et présentant un axe principal ;
- une entrée d'huile à une partie supérieure de l'enceinte ;
- une sortie d'huile à une partie inférieure de l'enceinte ;
remarquable en ce que le réservoir d'huile comprend, en outre :
- une roue disposée dans la partie inférieure de l'enceinte et apte à être entrainée en rotation par des moyens d'entrainement de manière à centrifuger l'huile contre une paroi de retenue de l'enceinte, et contre la sortie d'huile, et ainsi conserver une alimentation en huile de ladite sortie d'huile lors de phases de vol de l'aéronef en pesanteur nulle ou négative.

Avantageusement, l'entrée d'huile est une entrée d'huile mélangée à de l'air.

Selon un mode avantageux de l'invention, la roue présente un axe de rotation parallèle à l'axe principal ou incliné d'un angle de moins 20° par rapport audit axe principal.

Avantageusement, l'axe de rotation de la roue traverse l'enceinte, ledit axe de rotation étant apte à être entrainée par les moyens d'entrainement.

Avantageusement, les moyens d'entrainement comprennent un moteur électrique.

Avantageusement, les moyens d'entrainement sont situés dans l'enceinte.

Selon un mode avantageux de l'invention, la roue est adjacente à une paroi de fond de l'enceinte.

Selon un mode avantageux de l'invention, la paroi de retenue est de forme conique avec un tronçon de plus petit diamètre et un tronçon de plus grand diamètre.

Préférentiellement, la roue adjacente à la paroi de fond de l'enceinte signifie que le tronçon de plus petit diamètre est en regard et distant de la paroi de fond d'une distance correspondante à au plus 20% d'une hauteur totale de la partie inférieure de l'enceinte.

Selon un mode avantageux de l'invention, la sortie d'huile traverse la paroi de retenue sur le tronçon de plus grand diamètre.

Selon un mode avantageux de l'invention, la forme conique de la paroi de retenue présente un angle compris entre 10° et 50°.

Selon un mode avantageux de l'invention, la paroi de retenue est une paroi latérale de l'enceinte, le tronçon de plus petit diamètre étant adjacent à la paroi de fond de ladite enceinte.

Selon un mode avantageux de l'invention, la roue présente une enveloppe extérieure de forme conique parallèle à la forme conique de la paroi de retenue ou inclinée de moins de 20° par rapport à ladite forme conique de la paroi de retenue.

Selon un mode avantageux de l'invention, l'enceinte comprend, en outre, une paroi transversale délimitant dans ladite enceinte un compartiment supérieur comprenant l'entrée d'huile et un compartiment inférieur comprenant la roue, la paroi de retenue et la sortie d'huile, ladite paroi transversale comprend au moins un passage reliant de manière fluidique le compartiment inférieur avec le compartiment supérieur.

Selon un mode avantageux de l'invention, l'au moins un passage comprend un conduit s'étendant depuis la paroi transversale dans la roue.

Selon un mode avantageux de l'invention, le conduit s'étendant sur au moins 80% d'une hauteur de la roue suivant une direction principale dudit conduit.

Selon un mode avantageux de l'invention, l'au moins un passage comprend un clapet apte à permettre un écoulement de l'huile du compartiment supérieur vers le compartiment inférieur et à bloquer un écoulement de l'huile du compartiment inférieur vers le compartiment supérieur.

Avantageusement, le réservoir d'huile comprend un départ d'huile sur le compartiment supérieur et adjacent à la paroi transversale.

Selon un mode avantageux de l'invention, la sortie d'huile sur le compartiment inférieur est une sortie d'huile auxiliaire, ledit réservoir d'huile comprenant une entrée d'huile auxiliaire sur ledit compartiment inférieur.

L'invention a également trait à un système hydraulique pour turbomachine d'aéronef comprenant :
- un réservoir d'huile ;
- un circuit de lubrification de la turbomachine, relié hydrauliquement au réservoir d'huile ;
- un circuit de commande hydraulique d'au moins un actuateur hydraulique, relié hydrauliquement au réservoir d'huile ;
remarquable en ce que le réservoir d'huile est selon l"invention, le circuit de lubrification étant relié hydrauliquement à l'entrée d'huile et à un départ d'huile, disposé sur l'enceinte, le circuit de commande hydraulique étant relié hydrauliquement à l'entrée auxiliaire et à la sortie auxiliaire.

Avantageusement, l'entrée d'huile est une entrée d'huile mélangée à de l'air.

L'invention a également trait à une turbomachine d'aéronef, comprenant :
- une hélice non carénée propulsant un flux d'air entrant, ladite hélice comprenant des aubes à calage variable actionnées par au moins un actuateur hydraulique ;
- un système hydraulique apte à assurer une lubrification de la turbomachine et à commander l'au moins un actuateur hydraulique ;
remarquable en ce que le système hydraulique est selon l'invention.

L'invention a également trait à une turbomachine comprenant :
- une hélice non carénée propulsant un flux d'air entrant, ladite hélice comprenant un système à calage variable permettant d'actionner le pas des aubes de l'hélice ;
- un réservoir d'huile pour la lubrification de composants de la turbomachine, remarquable en ce que ledit réservoir comprend :
   - une enceinte apte à contenir l'huile et présentant un axe principal ;
   - une entrée d'huile à une partie supérieure de l'enceinte ;
   - une sortie d'huile à une partie inférieure de l'enceinte ;
   - une roue disposée dans la partie inférieure de l'enceinte et apte à être entrainée en rotation par des moyens d'entrainement de manière à centrifuger l'huile contre une paroi de retenue de l'enceinte et contre la sortie d'huile, et ainsi conserver une alimentation en huile de ladite sortie d'huile lors de phases de vol de l'aéronef en pesanteur nulle ou négative.

Selon un mode avantageux de l'invention, le système à calage variable est un premier système à calage variable, et ladite turbomachine comprend, en outre, un redresseur comprenant une pluralité d'aubes statoriques s'étendant depuis un carter fixe, ledit redresseur comprenant un deuxième système à calage variable, et en ce que la sortie auxiliaire est hydrauliquement reliée à un deuxième circuit fermé comprenant des composants du premier système et/ou du deuxième système à calage variable de la turbomachine.

### Avantages de l'invention

L'invention est particulièrement avantageuse en ce qu'elle permet de garantir une alimentation en huile des différents composants de la turbomachine, dont notamment le(s) système(s) à calage variable, et cela tout en assurant que ce(s) dernier(s) soi(en)t alimenté(s) en huile pure sans aucune présence d'air et sans interruption d'alimentation lors des phases de vol en gravité nulle et en gravité négative.

Avantageusement, l'effort centrifuge généré par la roue est capable de plaquer l'huile contre la paroi de retenue de manière à vaincre la gravité lors de toutes les phases de vol de l'aéronef. Ainsi, la commande hydraulique du système d'actionnement du pas de l'hélice de la turbomachine peut rester opérationnelle lors de toutes les phases de vol de l'aéronef.

De plus, le réservoir est compact, ce qui permet de réduire l'encombrement global et la masse de la turbomachine.

### Description des dessins

[Fig 1] est une vue schématique en coupe axiale d'une turbomachine d'aéronef selon l'invention ;
[Fig 2] illustre un schéma d'un système hydraulique la turbomachine de la figure 1 ;
[Fig 3] représente une vue en coupe d'un réservoir d'huile selon l'invention ;
[Fig 4] représente une variante du réservoir d'huile de la figure 3 ;
[Fig 5] représente une vue en coupe d'un réservoir d'huile de la figure 3 lors d'une phase de vol de l'aéronef en pesanteur négative.

### Description détaillée

Les figures montrent les éléments de manière schématique et ne sont pas représentées à l'échelle. En particulier, certaines dimensions sont agrandies pour faciliter la lecture des figures.

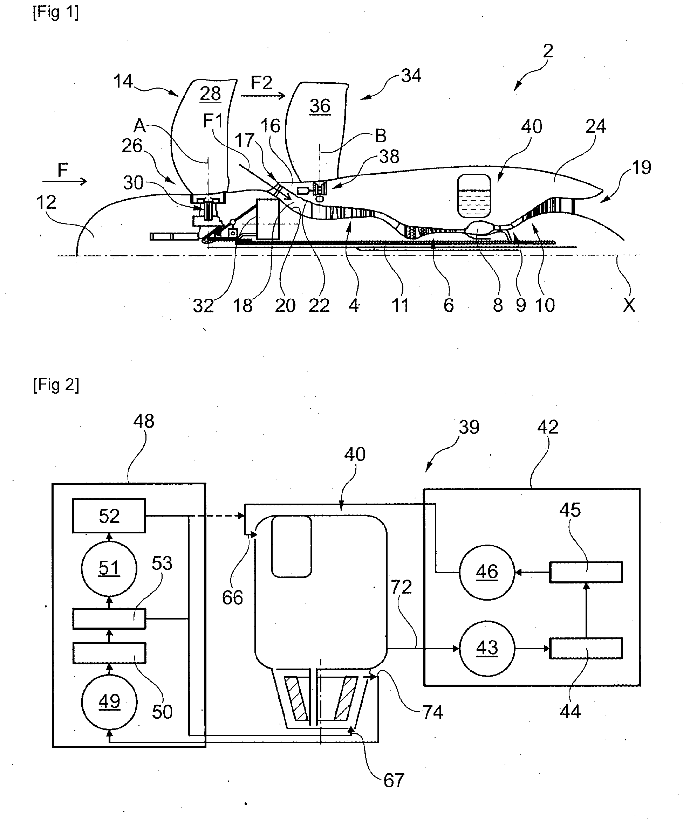

La figure 1 illustre schématiquement une vue en coupe axiale d'une turbomachine d'aéronef selon l'invention. Il s'agit d'une turbomachine connue sous l'expression anglaise « open rotor » ou « unducted fan », et particulièrement d'une turbomachine USF « Unducted Single Fan ».

Dans la description qui va suivre, les termes « interne » et « externe » renvoient à un positionnement par rapport à l'axe de rotation d'une turbomachine, et ici suivant l'axe longitudinal X (et même de gauche à droite sur la figure 1. Les termes « radial », « interne » et « externe » sont définis par rapport à une direction radiale perpendiculaire à l'axe longitudinal X. L'amont et l'aval sont en référence au sens d'écoulement d'un flux dans la turbomachine. Par ailleurs, les éléments illustrés dans les figures qui sont identiques ou sensiblement identiques et/ou avec les mêmes fonctions sont représentés par les mêmes références numériques.

La turbomachine 2 comprend typiquement d'amont en aval, un premier niveau de compression, dit compresseur basse pression 4, ainsi qu'un deuxième niveau de compression, dit compresseur haute pression 6, une chambre de combustion 8 suivie d'une turbine haute pression 9 et d'une turbine basse pression 10.

La turbomachine 2 comprend une hélice 14 agencée en amont d'un bec de séparation 16 porté par un carter externe 24 et apte à séparer le flux d'air entrant F en un flux secondaire F2 et un flux primaire F1 circulant dans une veine primaire 18 et traversant les différents niveaux susmentionnés de la turbomachine 2.

La veine primaire 18 est délimitée radialement par une paroi radialement interne 20 et une paroi radialement externe 22. La paroi radialement interne 20 est portée par le carter interne 12. La paroi radialement externe 22 est portée par le carter externe 24. Le flux d'air primaire F1 entre dans la veine primaire 18 par une entrée d'air annulaire 17 et s'en échappe par une tuyère primaire 19 qui est disposée en aval de ladite veine primaire 18. Le flux primaire F1 peut être accéléré par la tuyère primaire 19 de sorte à générer une réaction de poussée nécessaire au vol de l'aéronef.

La turbomachine comprend un carter rotatif 26 centré sur l'axe longitudinal X et tournant autour de ce dernier. Le carter rotatif 26 porte une couronne de pales 28 mobiles formant l'hélice 14. Le carter rotatif 26 est monté mobile par rapport au carter interne 12 qui le porte.

Le flux d'air F qui entre dans la turbomachine traverse les pales 28 de l'hélice 14 pour former le flux d'air secondaire F2. Ce dernier circule autour du carter externe 24. Chaque pale 28 de l'hélice 14 comprend un pied 30 et une partie aérodynamique s'étendant radialement vers l'extérieur depuis le pied 30, ce dernier comprenant un pivot. En effet, le pied 30 est monté pivotant autour d'un axe A (perpendiculaire à X) permettant ainsi le pivotement des pales 28 de l'hélice 14. Ce pivotement est géré par un premier système à calage variable de la turbomachine 2.

Le compresseur basse pression 4 et la turbine basse pression 10 sont reliés mécaniquement par un arbre basse pression 11, ce dernier entraîne l'hélice 14 par l'intermédiaire d'un réducteur 32, l'hélice 14 comprime l'air à l'extérieur du carter externe 24 et fournit la majeure partie de la poussée de la turbomachine 2. Le réducteur 32 peut être de type à train planétaire.

La turbomachine 2 comprend un redresseur 34 traversé par lé flux secondaire F2, ce dernier étant une partie du flux d'air F propulsée radialement extérieurement à l'axe longitudinal X. Le redresseur 34 comprend une pluralités d'aubes de stator 36 (ou aubes statoriques ou aubes fixes) connues sous l'acronyme anglais «OGV» (Outlet Guide Vane). Les aubes de stator 36 sont réparties régulièrement autour de l'axe longitudinal X et s'étendent radialement dans le flux d'air secondaire F2. Les aubes de stator 36 sont portées par une structure fixe solidaire du carter externe 24. En particulier, chaque aube de stator 36 s'étend radialement depuis un pied 38, ce dernier est monté pivotant autour d'un axe B (perpendiculaire à X) permettant le pivotement des aubes statoriques 36 du redresseur 34. Ce pivotent est géré par un deuxième système à calage variable de la turbomachine 2.

La turbomachine 2 comprend, en outre, un réservoir d'huile 40 pour la lubrification et/ou le refroidissement des composants de ladite turbomachine 2. A cet effet, le réservoir d'huile 40 est le réservoir d'huile principal de la turbomachine 2, et permet en outre, d'alimenter en huile les premier et deuxième systèmes à calage variable de la turbomachine 2. De préférence, le réservoir 40 est agencé au droit du carter externe 24. L'architecture et le fonctionnement du réservoir d'huile 40, 400 seront détaillés plus loin dans la présente description.

La figure 2 est un schéma d'un système hydraulique 39 de la turbomachine de la figure 1. Le système hydraulique 39 comprend différents circuits fermés reliés au réservoir d'huile de l'invention.

En référence à la figure 2, le réservoir d'huile 40 est relié hydrauliquement à un circuit de lubrification et refroidissement 42 du moteur de la turbomachine, ce circuit comprend une pompe d'alimentation 43, des échangeurs 44 et des enceintes moteur 45, ces dernières assurent la lubrification des roulements, des réducteurs et des paliers et permettent de garantir l'étanchéité air/huile du moteur.

Le circuit de lubrification 42 comprend, en outre, au moins une pompe de récupération 46 configurée pour récupérer l'huile des enceintes moteur 45 et les diriger vers le réservoir d'huile 40. Le circuit 42 peut correspondre à un groupe de lubrification de la turbomachine.

Le réservoir d'huile 40 est également relié hydrauliquement à un circuit 48 d'actionnement du pas des aubes de l'hélice, aussi désigné par un circuit de commande hydraulique 48 permettant d'alimenter en huile le premier système à calage variable de la turbomachine de la figure 1, à savoir de l'hélice 14.

Le circuit de commande hydraulique 48 peut aussi alimenter en huilé le deuxième système à calage variable de la turbomachine de la figure 1, à savoir du redresseur 34, indépendamment ou en combinaison avec le premier système à calage variable.

Le circuit de commande hydraulique 48 peut assurer des fonctions de lubrification et/ou de refroidissement du système à calage variable. A cet égard, le circuit 48 comprend une pompe de gavage 49 récupérant l'huile d'une partie inférieure du réservoir 40 pour diriger celle-ci vers un échangeur 50.

Préférentiellement, le circuit de commande hydraulique 48 est aussi configuré pour commander hydrauliquement le système à calage variable en plus des fonctions de lubrification et de refroidissement. A cet égard, le circuit 48 comprend une pompe d'actionnement du pas 51 pouvant hydrauliquement commander un système d'actionnement du pas ou actuateur hydraulique 52, ce dernier peut correspondre au premier et/ou au deuxième système à calage variable de la turbomachine.

Dans cette configuration, la pompe d'actionnement du pas 51 permet d'actionner l'actuateur hydraulique 52 entraînant le pivotement des pieds 30 et 38 de la figure 1.

Préférentiellement, le circuit de commande hydraulique 48 comprend une valve de by-pass 53 permettant le choix entre une fonction de refroidissement ou d'actionnement du pas du système à calage variable.

Avantageusement, le système hydraulique 39 comprend une connexion (illustrée en pointillés) entre le circuit de commande hydraulique 48 et le circuit de lubrification 42 pour récolter des éventuelles fuites des vérins d'actuation des pas d'hélice et de réinjecter cette huile dans le réservoir 40 à partir d'une entrée 66.

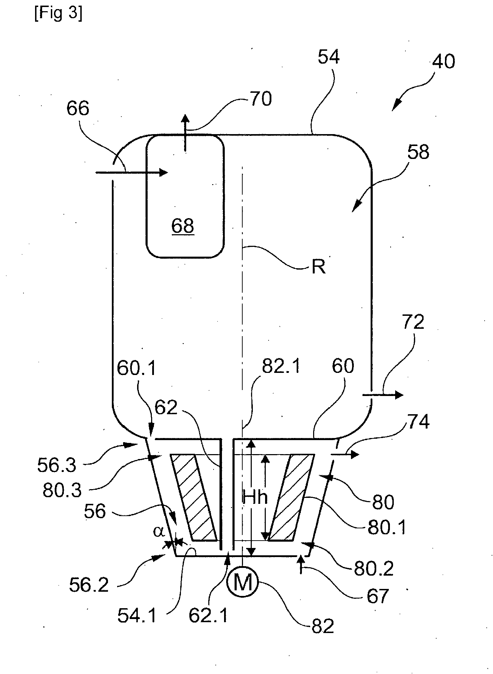

La figure 3 illustre une vue en coupe du réservoir d'huile 40, ce dernier comprend, une arrivée d'huile 66 mélangée à de l'air vers une enceinte principale 54 apte à contenir l'huile (huile non représentée ici pour mieux simplifier l'illustration), et précisément vers un dispositif désaérateur d'huile 68, permettant d'évacuer l'air 70 mélangé avec l'huile à l'arrivée d'huile 66. L'arrivée d'huile 66 provient de préférence de l'au moins une pompe de récupération 46 de la figure 2.

L'enceinte principale 54 présente un axe principal R correspondant préférentiellement à une direction principale R destinée à être orientée verticalement en position de montage dans la turbomachine 2 de la figure 1.

De préférence, l'axe principal R correspond à la direction principale de l'étendue de l'enceinte principale 54. A cet effet, l'axe principal R définit le sens de la plus grande dimension de ladite enceinte 54.

Préférentiellement, l'axe principal R de l'enceinte 54 suit la direction de la pesanteur (perpendiculaire au plan horizontal). Toutefois, l'axe principal R peut être incliné par rapport à la direction de la pesanteur d'un angle pouvant aller jusqu'à 45° ou dépasser 45° jusqu'à former un angle inférieur à 90°.

Suivant le sens de la pesanteur (effort perpendiculaire à l'horizontal et dirigé vers le bas), le compartiment supérieur 58 est au-dessus du compartiment inférieur 56.

Alternativement, l'enceinte 54 du réservoir 40 peut avoir une forme sensiblement oblongue et/ou incurvée. Préférentiellement, l'enceinte 54 comprend une forme sensiblement cylindrique.

Le réservoir 40 comprend une paroi transversale 60 délimitant dans ladite enceinte un compartiment supérieur 58 correspondant à une partie supérieure de l'enceinte 54 comprenant l'entrée d'huile 66, et un compartiment inférieur 56 correspondant à une partie inférieure de l'enceinte 54 et comprenant une sortie d'huile 74.

Le réservoir 40 comprend également un départ d'huile 72 disposé préférentiellement au droit d'une paroi latérale du compartiment supérieur 58, ce départ d'huile 72 est de préférence adjacent à la paroi transversale 60. Dans cette configuration, l'arrivée d'huile 66 et le départ d'huile 72 forment un circuit correspondant au circuit de lubrification 42 de la figure 2.

Le compartiment inférieur 56 est formé par une paroi de retenue 56.1 correspondant à une paroi latérale de l'enceinte 54 et précisément à une paroi latérale de la partie inférieure de l'enceinte 54. Préférentiellement, la paroi de retenue 56.1 comprend une forme circulaire conique avec un tronçon de plus petit diamètre 56.2 et un tronçon de plus grand diamètre 56.3. Préférentiellement, la paroi de fond 54.1 est formée avec la paroi de retenue 56.1.

Avantageusement, l'agencement du compartiment inférieur 56 à l'intérieur de l'enceinte principale 54 permet d'obtenir un échange rapide des flux de l'huile entre ces deux derniers.

Dans cette configuration, la forme conique de la paroi de retenue 56.1 présente un angle de conicité α compris entre 10° et 50°, et étant préférentiellement compris entre 20° et 45°, et étant encore plus préférentiellement égal à 30°. L'angle de conicité α est présenté entre la paroi de retenue 56.1 et la direction principale (verticale), la paroi de retenue 56.1 peut toutefois présenter une inclinaison de moins de 20° par rapport à la direction principale.

Le compartiment inférieur 56 comprend une entrée d'huile auxiliaire 67 disposée préférentiellement au droit de la paroi de fond 54.1, ladite entrée d'huile auxiliaire 67 étant préférentiellement orientée de manière tangentielle à la paroi de retenue 56.1 afin de donner au flux d'huile entrant une orientation similaire à celle engendrée par la roue 80.

Le compartiment inférieur 56 comprend également une sortie auxiliaire d'huile 74 traversant la paroi de retenue 56.1 de référence sur le tronçon de plus grand diamètre 56.3. A cet effet, les entrée et sorite auxiliaires 67, 74 permettent de former un circuit fermé afin d'alimenter en huile le circuit de commande hydraulique 48 de la figure 2.

Préférentiellement, l'entrée 67 est disposée dans une extrémité de la paroi de fond 54.1 de manière adjacente à la paroi de retenue 56.1 et proche de la sortie auxiliaire 74. Avantageusement, cela permet de minimiser le trajet d'huile entre l'entrée 67 et la sortie 74 dans le compartiment inférieur 56.

Le réservoir 40 comprend, en outre, une roue 80 agencée dans le compartiment inférieur 56 et ayant également une forme circulaire conique. En effet, la roue 80 comprend une enveloppe extérieure 80.1 de forme conique parallèle à la forme conique de la paroi de retenue 56.1.

A cet égard, l'enveloppe extérieure 80.1 comprend un tronçon de plus petit diamètre 80.2 et un tronçon de plus grand diamètre 80.3 étant chacun sensiblement au même niveau que les tronçons 56.2, 56.3 de la paroi de retenue 56.1, respectivement. Préférentiellement, le tronçon de plus petit diamètre 80.2 de la roue 80 est adjacent à la paroi inférieure 54.1 de l'enceinte 54.

Préférentiellement, le tronçon de plus petit diamètre 80.2 de la roue 80 est en regard et distant de la paroi de fond 54.1 d'une distance correspondante à au plus 20% d'une hauteur totale H du compartiment inférieur 56.La roue 80 est entrainée en rotation par des moyens d'entrainement 82, ces derniers sont reliés à la roue au moyen d'un arbre (non illustré) présentant un axe 82.1 de rotation de la roue 80 dans le compartiment inférieur 56, cet axe 82.1 est préférentiellement parallèle à la direction principale verticale du réservoir 40, ou incliné d'au plus 20° de ladite direction principale.

On peut voir sur la figure 3 que les moyens d'entrainement 82 sont schématiquement illustrés extérieurement au réservoir et en dessous de la paroi de fond 54.1. Dans cette configuration, les moyens d'entrainement 82 peuvent correspondre à un réducteur et/ou un renvoi d'angle appartenant à la turbomachine de la figure 1. A cet effet, l'arbre entraine la roue 80 en rotation à la suite d'une récupération du mouvement de rotation à partir du réducteur et/ou du renvoi d'angle.

A cet effet, la paroi de fond 54.1 peut comprendre un roulement et au moins un joint permettant de garantir l'étanchéité du compartiment inférieur 56.

Toutefois les moyens d'entrainement 82 peuvent correspondre à un moteur électrique agencé dans le compartiment inférieur 56 entre le tronçon de plus petit diamètre 80.2 et le fond 54.1. Ce moteur peut également être agencé dans le compartiment supérieur 58 et préférentiellement au droit de la paroi transversale 60. Avantageusement, un tel agencement permet d'assurer un gain d'encombrement dans le réservoir 40.

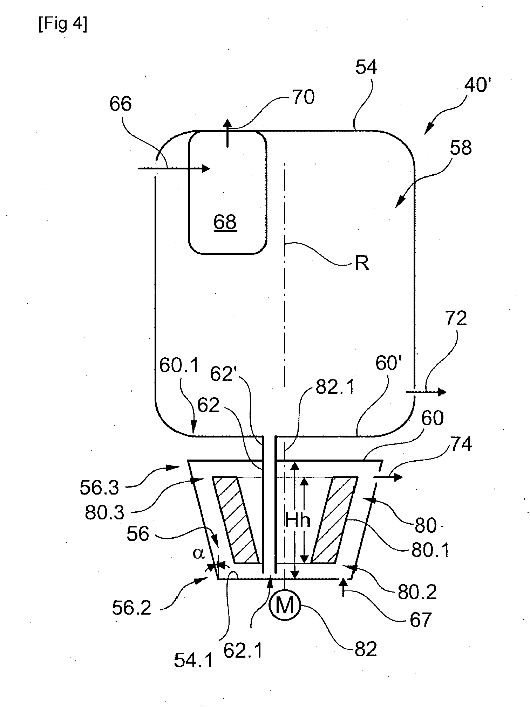

La figure 4 illustre une alternative au réservoir de la figure 3, dans laquelle le compartiment inférieur 56 du réservoir 40' est disposé extérieurement au compartiment supérieur 58. Avantageusement, cela permet d'intégrer le réservoir 40' dans un environnement particulièrement contraignant de la turbomachine. A cet égard, un ou plusieurs canalisations hydrauliques 62' peuvent relier les deux compartiments 58 et 54. Dans cette configuration, la ou les canalisations hydrauliques 62' peuvent être flexibles et/ou peuvent être confondus avec un canal 62 du compartiment inférieur.

On peut voir à la figure 4 que l'enceinte principale 54 du réservoir 40' comprend une paroi transversale 60' correspondant à une paroi de fond 60' du compartiment supérieur 58. Ladite paroi 60' peut avantageusement avoir une forme conique de manière à faciliter la circulation d'huile vers le canal 62 lors d'un retour en gravité positive après un événement en gravité négative.

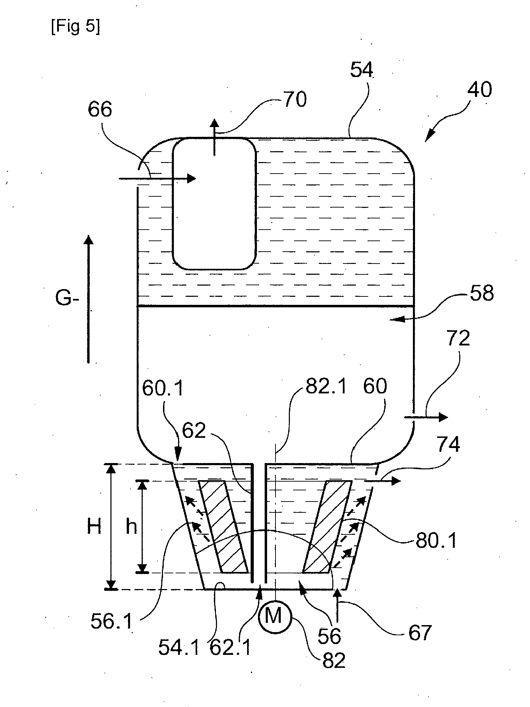

La figure 5 représente une vue en coupe du réservoir d'huile 40 lors d'une phase de vol de l'aéronef en G négatif. A présent, G+ fera référence à une pesanteur positive et G- à une pesanteur négative.

Il est à noter que le réservoir 40 est apte à assurer une alimentation constante en huile pure lors de phases de vol en G-, et chacune des phases en G- dure entre une fraction de seconde et 45 secondes. Avantageusement, le réservoir 40 peut être dimensionné de manière à assurer une alimentation constante en huile même au-delà des 45 secondes.

La paroi transversale 60 comprend préférentiellement un passage d'huile correspondant à un conduit 62 reliant de manière fluidique le compartiment supérieur 58 avec le compartiment inférieur 56.

Dans une alternative non représentée, la paroi transversale 60 peut avoir une forme conique de manière à faciliter la circulation d'huile vers le canal 62 lors du retour en G+.

De préférence, le conduit 62 s'étend sur au moins 80% d'une hauteur h de la roue 80, et plus préférentiellement, le conduit 62 s'étend sur au moins 80% d'une hauteur totale H du compartiment inférieur 56 et sur la totalité de la hauteur h de la roue 80. Dans cette configuration, la paroi de fond 54.1 de l'enceinte 54 est adjacente à une extrémité distale 62.1 du conduit 62.

Préférentiellement, le conduit 62 s'étend dans la roue 80 de manière à ce que l'enveloppe extérieure 80.1 enveloppe intégralement le conduit 62. Ce dernier étant légèrement décalé de l'axe de rotation 82.1 de la roue 80 pour permettre le passage de l'arbre des moyens d'entrainement 82.

De manière avantageuse, le conduit 62 délimite un volume tampon d'huile en G-entre l'extrémité distale 62.1 et la paroi transversale 60, ce volume tampon d'huile est destiné à être aspiré vers la sortie d'huile auxiliaire 74 pour alimenter en huile et sans interruption le circuit de commande hydraulique pendant toute la durée de l'événement G0 et G- de l'aéronef.

Préférentiellement, la hauteur h de la roue 80 correspond à environ 80% (±10%) de la hauteur totale H du compartiment inférieur 56. Toutefois, dans une alternative non illustrée, la roue 80 peut intégralement se retrouver dans une moitié inférieure du compartiment inférieur 56. En effet, la hauteur h de la roue 80 peut être optimisée en fonction des dimensions du réservoir 40 et des vitesses de rotation de la roue 80. Par exemple, une roue 80 de petite taille proche du fond 54.1 peut suffire pour générer la quantité de mouvement nécessaire pour permettre à l'huile d'atteindre la sortie d'huile auxiliaire 74. A cet égard, la hauteur h de la roue 80 peut correspondre à plus de 20% et/ou à moins de 90% de la hauteur totale H du compartiment inférieur 56.

L'extrémité distale 62.1 peut comprendre un clapet anti-retour (non représenté), ce clapet est préférentiellement sensible aux changements de la pesanteur. A cet effet, le clapet est apte à permettre l'écoulement de l'huile du compartiment supérieur 58 vers le compartiment inférieur 56 en G+ et à bloquer l'écoulement de l'huile du compartiment inférieur 56 vers le compartiment supérieur 58 en G-. Cela permet d'avantageusement maximiser la retenue de l'huile dans le compartiment inférieur 56 en G-.

Parallèlement, la paroi transversale 60 peut également comprendre une vanne (non illustrée) ou un clapet sensible aux changements de la pesanteur et permettant d'avantageusement conserver l'huile dans le compartiment inférieur 56 en G- et d'accélérer le retour d'huile dans ledit compartiment en G+.

De plus, paroi transversale 60 peut, en outre, comprendre un évent 60.1 permettant d'évacuer l'air rapidement du compartiment inférieur 56 afin de permettre un retour rapide de l'huile vers ledit compartiment lors d'un retour de l'aéronef en G+ après le G-.

Le volume tampon d'huile retenue lors du G- dans le compartiment inférieur 56 est centrifugé contre la paroi de retenue 56.1 au moyen de la roue 80. En effet, la roue 80 est entrainée en rotation pendant toute la durée du G0 et du G-. A cet effet, l'huile est centrifugée contre la paroi de retenue 56.1 et contre la sortie d'huile auxiliaire 74.

Préféréntiellement, les moyens d'entrainement 82 entrainent la roue 80 en rotation pendant toutes les phases de vol de l'aéronef (G+, G0 et G-). Avantageusement, cela permet à l'huile d'être plaquée constamment contre la paroi de retenue 56.1 afin d'atteindre la sortie 74 (déplacements de l'huiles illustrés en pointillés) et de sécuriser davantage le fonctionnement et l'alimentation en continu le circuit de commande hydraulique 48 de la figure 2.

Toutefois, la roue 80 peut être commandée de manière à être entrainée en rotation uniquement lors des événement G0 et G-, notamment si les moyens d'entrainement 82 correspondent à un moteur électrique.

De préférence, l'enveloppe extérieure 80.1 conique peut correspondre à une surface poreuse présentant plusieurs poches aptes à contenir l'huile afin de maximiser l'effort centrifuge engendré à l'huile par la rotation de la roue 80. Similairement, l'enveloppe extérieure 80.1 peut comprendre des creux ou des rainures s'étendant sur toute la hauteur h de la roue 80. Préférentiellement, l'enveloppe extérieure 80.1 comprend une conformation en écope et/ou plusieurs aubes (hachurées sur la figure 5) s'étendant sur toute la hauteur h et présentant avantageusement une trajectoire spiralée autour de l'axe 82.1. Dans cette configuration, l'huile présente un trajet d'écoulement tourbillonnant annulaire sur la paroi de retenue 56.1.

Avantageusement, la roue 80 permet d'efficacement transmettre l'effort centrifuge au volume d'huile tampon dans le compartiment inférieur du réservoir 40 de manière à induire un écoulement d'huile vers la sortie auxiliaire 74.

De manière avantageuse, la turbomachine de la présente invention est capable d'assurer un fonctionnement continu et sécurisé de ses systèmes à calage variable grâce au réservoir principal d'huile permettant d'assurer un gavage en huile afin d'alimenter de tels systèmes en huile pure sans aucune présence d'air et sans interruption d'alimentation lors des phases de vol en pesanteur nulle ou négative.

## Revendications

1. Réservoir d'huile (40) pour turbomachine (2) d'aéronef, comprenant :
- une enceinte (54) apte à contenir l'huile et présentant un axe principal ;
- une entrée d'huile (66) à une partie supérieure de l'enceinte (54) ;
- une sortie d'huile (74) à une partie inférieure de l'enceinte (54) ;
**caractérisé en ce que** le réservoir d'huile (40) comprend, en outre :
- une roue (80) disposée dans la partie inférieure de l'enceinte (54) et apte à être entrainée en rotation par des moyens d'entrainement (80) de manière à centrifuger l'huile contre une paroi de retenue (56.1) de l'enceinte (54) et contre la sortie d'huile (74), et ainsi conserver une alimentation en huile de ladite sortie d'huile (74) lors de phases de vol de l'aéronef en pesanteur nulle ou négative.

2. Réservoir d'huile (40) selon la revendication 1, dans lequel la roue (80) présente un axe de rotation (82.1) parallèle à l'axe principal (R) ou incliné d'un angle de moins 20° par rapport audit axe principal (R).

3. Réservoir d'huile (40) selon l'une des revendications 1 et 2, dans lequel la roue (80) est adjacente à une paroi de fond (54.1) de l'enceinte (54).

4. Réservoir d'huile (40) selon l'une des revendications 1 à 3, dans lequel la paroi de retenue (56.1) est de forme conique avec un tronçon de plus petit diamètre (56.2) et un tronçon de plus grand diamètre (56.3).

5. Réservoir d'huile (40) selon la revendication 4, dans lequel la sortie d'huile (74) traverse la paroi de retenue (56.1) sur le tronçon de plus grand diamètre (56.3).

6. Réservoir d'huile (40) selon l'une des revendications 4 et 5, dans lequel la forme conique de la paroi de retenue (56.1) présente un angle (α) compris entre 10° et 50°.

7. Réservoir d'huile (40) selon l'une des revendications 4 à 6, dans lequel la paroi de retenue (56.1) est une paroi latérale de l'enceinte (54), le tronçon de plus petit diamètre (56.2) étant adjacent à la paroi de fond (54.1) de ladite enceinte (54).

8. Réservoir d'huile (40) selon l'une des revendications 4 à 7, dans lequel la roue (80) présente une enveloppe extérieure (80.1) de forme conique parallèle à la forme conique de la paroi de retenue (56.1) ou inclinée de moins de 20° par rapport à ladite forme conique de la paroi de retenue (56.1).

9. Réservoir d'huile (40) selon l'une des revendications 1 à 8, dans lequel l'enceinte (54) comprend, en outre, une paroi transversale (60) délimitant dans ladite enceinte un compartiment supérieur (58) comprenant l'entrée d'huile (66) et un compartiment inférieur (56) comprenant la roue (80), la paroi de retenue (56.1) et la sortie d'huile (74), ladite paroi transversale (60) comprend au moins un passage (62) reliant de manière fluidique le compartiment inférieur (56) avec le compartiment supérieur (58).

10. Réservoir d'huile (40) selon la revendication 9, dans lequel l'au moins un passage comprend un conduit (62) s'étendant depuis la paroi transversale (60) dans la roue (80).

11. Réservoir d'huile (40) selon la revendication 10, dans lequel le conduit (62) s'étendant sur au moins 80% d'une hauteur (h) de la roue (80) suivant une direction principale dudit conduit (62).

12. Réservoir d'huile (40) selon l'une des revendications 9 à 11, dans lequel l'au moins un passage (62) comprend un clapet apte à permettre un écoulement de l'huile du compartiment supérieur (58) vers le compartiment inférieur (56) et à bloquer un'écoulement de l'huile du compartiment inférieur (56) vers le compartiment supérieur (58).

13. Réservoir d'huile (40) selon l'une, des revendications 9 à 12, dans lequel la sortie d'huile (74) sur le compartiment inférieur (56) est une sortie d'huile auxiliaire (74), ledit réservoir d'huile (40) comprenant une entrée d'huile auxiliaire (67) sur ledit compartiment inférieur (56).

14. Système hydraulique (39) pour turbomachine (2) d'aéronef comprenant :
- un réservoir d'huile (40) ;
- un circuit de lubrification (42) de la turbomachine (2), relié hydrauliquement au réservoir d'huile (40) ;
- un circuit de commande hydraulique (48) d'au moins un actuateur hydraulique (52), relié hydrauliquement au réservoir d'huile (40) ; **caractérisé en ce que** le réservoir d'huile (40) est selon l'une des revendications 1 à 12, le circuit de lubrification étant relié hydrauliquement à l'entrée d'huile (66) et à un départ d'huile (72), disposé sur l'enceinte (54), le circuit de commande hydraulique (48) étant relié hydrauliquement à l'entrée auxiliaire (67) et à la sortie auxiliaire (74).

15. Turbomachine (2) d'aéronef, comprenant :
- une hélice (14) non carénée propulsant un flux d'air entrant (F), ladite hélice (14) comprenant des aubes (28) à calage variable actionnées par au moins un actuateur hydraulique (52) ;
- un système hydraulique (39) apte à assurer une lubrification de la turbomachine (2) et à commander l'au moins un actuateur hydraulique (52) ; **caractérisé en ce que** le système hydraulique (39) est selon la revendication 14.
